# EUROPÄISCHE PATENTANMELDUNG

(11) **EP 1 477 772 A1**
(43) Veröffentlichungstag der Anmeldung: **17.11.2004**
(21) Anmeldenummer: 04010506.6
(22) Anmeldetag: 03.05.2004
(51) Int. Cl.: G01D 5/14, G01D 5/16

(54) **Magnetischer Positions- oder Winkelsensor**

(30) Priorität: 13.05.2003 EP 03010677
(71) Anmelder: Tyco Electronics AMP GmbH, 64625 Bensheim (DE)
(72) Erfinder: Stross, Stefan, 69234 Dielheim (DE); Wolf, Marco, 76879 Hochstadt (DE)
(74) Vertreter: Heinz-Schäfer, Marion

(57) **Zusammenfassung**

Die Erfindung betrifft einen linear messender Positionsund Winkelsensor mit einem U-förmigen Dauermagneten (1) mit Schenkeln (2,3) und einer Basis (4), der eine vertikale Magnetisierungsrichtung aufweist, wobei durch drei gleichnamige, einander abstossende Pole des Dauermagneten (1) ein magnetflussfreier Bereich gebildet ist, in dem ein Magnetsensorelement (5) angeordnet ist, mit einem oberhalb der Schenkel (2,3) vorgesehenen bewegbaren Auslöseteil (6) aus einem ferromagnetischen Werkstoff, wobei das Auslöseteil (6), eine vorgegebene äussere Kontur aufweist, die sich bei Bewegung des Auslöseteils (6) der Basis (4) des Dauermagneten (1) annähert oder von dieser entfernt und dadurch das Magnetfeld im Bereich des Magnetsensorelementes (5) verändert, wobei das Magnetsensorelement (5) Änderungen des Magnetfeldes in ein proportionales lineares elektrisches Ausgangssignal X umwandelt.

## Beschreibung

Die Erfindung betrifft einen linear messenden Positionsund Winkelsensor mit einem U-förmigen Dauermagneten mit Schenkeln und einer Basis, der eine vertikale Magnetisierungsrichtung aufweist, wobei durch drei gleichnamige, einander abstossende Pole des Dauermagneten ein magnetflussfreier Bereich gebildet ist, in dem ein Magnetsensorelement angeordnet ist, und mit einem oberhalb der Schenkel vorgesehenen bewegbaren Auslöseteil aus einem ferromagnetischen Werkstoff und wobei das Auslöseteil, eine vorgegebene äussere Kontur aufweist, die sich bei Bewegung des Auslöseteils der Basis des Dauermagneten annähert oder von dieser entfernt und dadurch das Magnetfeld im Bereich des Magnetsensorelementes verändert.

Aus der EP 0 778 954 B1 ist ein Näherungsschalter mit einem magnetfeldempfindlichen Sensor bekannt. Dieser Näherungsschalter weist ebenfalls einen U-förmigen Dauermagneten mit vertikaler Magnetisierungsrichtung auf, wobei zwischen den Schenkeln des U's durch drei gleichnamige, einander abstossende Pole ein magnetflussfreier Bereich gebildet ist, in dem der magnetfeldempfindliche Sensor angebracht ist. Oberhalb der U-Schenkel in einer zur Basis des U parallelen Ebene ist ein annäherbares flächiges ferromagnetisches Auslöseteils vorgesehen, wobei bei Annäherung des Auslöseteils an die beiden Pole der U-Schenkel der magnetflussfreie Bereich aufgehoben wird. Ein durch Aufhebung des magnetflussfreien Bereiches ausgelöstes Schaltsignal des Sensors wird ausgegeben und kann ausgewertet werden. Bei dieser bekannten Anordnung wird die Veränderung des Magnetfeldes im Bereich des magnetfeldempfindlichen Sensors zur Auslösung eines Schaltsignals verwendet. Eine lineare Wegoder Winkelmessung ist mit dieser Anordnung nicht möglich.

Aus der US 6087827 ist ein inkrementaler Geschwindigkeitsund Positionssensor bekannt, mit dem auch besonders niedrige Geschwindigkeiten gemessen werden können. Dieser Sensor weißt ebenfalls eine bewegte Komponente aus einem ferromagnetischen Material auf, die zumindest einen beweglichen Zahn hat, der sich relativ zu einem Permanentmagneten bewegt. Ein magnetfeldempfindlicher Sensor ist zwischen dem Permanentmagneten und der bewegten Komponente angeordnet in der Nähe einer Singularität im Magnetfeld. Auch mit diesem Sensor wird eine inkrementale Messung der Lage vorgenommen, eine lineare Zuordnung von Ausgangssignal und Lage ist nicht vorgesehen.

Es ist Aufgabe der Erfindung mit einer möglichst einfachen Anordnung eine lineare Weg- und Winkelmessung zu ermöglichen.

Die Aufgabe wird durch eine Anordnung mit den Merkmalen des Patentanspruches 1 gelöst. Vorteilhafte Weiterbildungen sind in den Unteransprüchen angegeben.

Die erfindungsgemässe Anordnung weißt einen U-förmigen Dauermagneten mit vertikaler Magnetisierungsrichtung auf, wobei durch drei gleichnamige, einander abstossende Pole ein magnetflussfreier Bereich gebildet ist, in dem sich ein linear messendes Magnetsensorelement befindet. Oberhalb der Schenkel befindet sich ein ferromagnetisches Auslöseteil mit einem vorgegebenen Profil, durch dessen Annäherung oder Entfernung vom Dauermagneten das Magnetfeld und insbesondere die Lage der Singularität beeinflusst wird. Diese Änderung des Magnetfeldes wird durch das Magnetsensorelement in ein proportionales lineares elektrisches Signal gewandelt.

Eine entsprechende Signalkurve wird erhalten, indem die Kontur des Ansteuerelementes charakteristisch geformt ist und durch linear gekrümmte Ansteuerflächen oder Profilsprünge auf das Sensormagnetfeld einwirkt.

Es ist besonders vorteilhaft, das Magnetsensorelement zwischen den Schenkeln des U's anzuordnen, da dadurch ein besonders kompakter Aufbau und damit eine wirtschaftliche Lösung erreicht werden kann.

Es ist weiter von besonderem Vorteil, dass ein grosser linearer Ansteuerungsbereich ermöglicht wird, auf Grund der hohen Empfindlichkeit des Aufbaus. Diese hohe Empfindlichkeit wird auch dadurch erreicht, dass sich das Magnetsensorelement in der Singularität des Magnetfeldes befindet und daher gegen Schwankungen des Magnetfeldes auf Grund von Temperaturänderungen oder Alterungserscheinungen unempfindlich ist.

Es ist weiter von besonderem Vorteil, dass die Ansteuerungsmöglichkeiten des Sensors sehr flexibel sind und dadurch leicht in unterschiedliche Systeme integriert werden können.

Es ist weiter von besonderem Vorteil, dass das Auslöseteil aus unterschiedlichen permeablen Werkstoffen hergestellt werden kann. Dadurch kann der ansteuerbare Arbeitsbereich des Sensors angepasst oder erweitert werden.

Es ist weiter besonders vorteilhaft, dass als Magnetsensorelement ein linearer Hall-Sensor eingesetzt werden kann, mit oder ohne programmierbare Linearisierung.

Ausführungsbeispiele der Erfindung sollen nun anhand der Figuren erläutert werden.
Figur 1 zeigt eine rotatorische Ansteuerung zur linearen Erfassung von Winkelpositionen bis 360° in einer schematischen Darstellung.
Figur 2 zeigt die Abhängigkeit des Sensorsignals vom Winkel.
Figur 3 zeigt eine schematische Darstellung einer translatorischen Ansteuerung zur Erfassung von linearen Wegpositionen oder inkrementalen Stufen.
Figur 4 zeigt den Figur 3 entsprechenden Signalverlauf in Abhängigkeit vom Weg.
Figur 5 zeigt eine schematische Darstellung einer Näherungsansteuerung zur Erfassung von linearen Wegpositionen.
Figur 6 zeigt einen entsprechenden Signalverlauf in Abhängigkeit vom Weg.
Figur 7 zeigt in schematischer Darstellung eine differenzielle Erfassung von linearen Wegpositionen oder inkrementalen Stufen
Figur 8 zeigt die Abhängigkeit des Differenzsignals vom Weg.

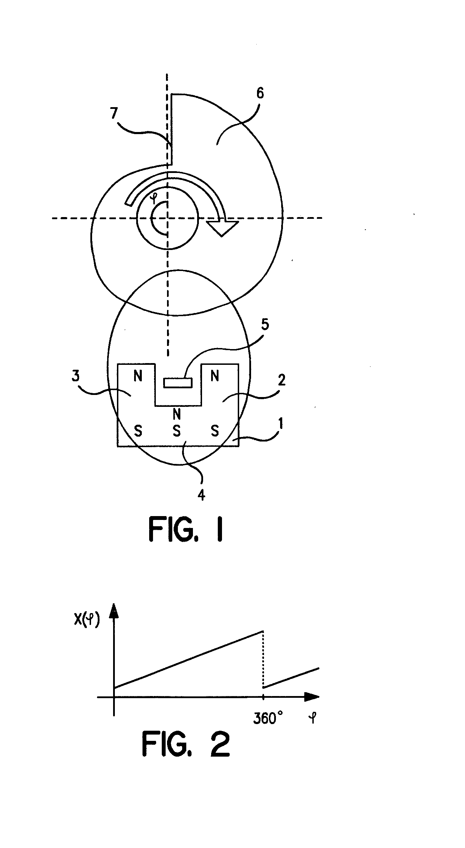

In Figur 1 ist der Einsatz eines erfindungsgemässen linear messenden Positions- und Winkelsensors als Winkelsensor dargestellt. Die Winkelposition eines Teils, das mit einem Auslöseteil verbunden ist, wird dabei linear erfasst.

Wie aus der schematischen Darstellung zu erkennen, ist ein Dauermagnet 1 vorgesehen. Der Dauermagnet ist U-förmig ausgebildet und weist Schenkel 2,3 und einer Basis 4 auf. Der Dauermagnet weist eine vertikale Magnetisierungsrichtung auf. Im angegebenen Beispiel sind der Nordpol auf der Seite der Öffnung des Dauermagneten und der Südpol auf der Seite der Basis angeordnet. Durch drei gleichnamige, einander abstossende Nordpole des Dauermagneten 1 ist ein magnetflussfreier Bereich gebildet, der sich zwischen den Schenkeln befindet.

In oder möglichst nahe an dieser Singularität ist ein Magnetsensorelement 5 angeordnet. Das Magnetsensorelement ist beispielsweise ein linear messender Hallsensor. Es kann sich dabei um einen Hallsensor mit programmierbarer Linearisierung handeln.

Die Ansteuerung des Magnetsensorelementes erfolgt mit einem oberhalb der Schenkel 2,3 vorgesehenen Auslöseteil 6 aus einem ferromagnetischen Werkstoff. Das Auslöseteil 6 weist eine vorgegebene äussere Kontur auf. Es ist um eine Achse drehbar, mit dem Teil dessen Winkelstellung gemessen werden soll. Es ist nahezu kreisscheibenförmig ausgebildet, wobei der Radius der Kreisscheibe linear ansteigt und einen Profilsprung 7 aufweist.

Bewegt bzw., dreht sich das Auslöseteil, so nähert sich je nach Drehsinn die Kontur des Auslöseteil der Basis des Dauermagneten an, bzw. entfernt sich von diesem. Durch diese Annäherung wird das Magnetfeld im Bereich des Magnetsensorelementes 5 verändert.
Die Veränderung ist dabei abhängig vom Drehwinkel **f** des Auslöseteils. Das Magnetsensorelement 5 wandelt die Änderungen des Magnetfeldes in ein proportionales lineares elektrisches Signal X um.

In Figur 2 ist das Ausgangssignal des Sensors in Abhängigkeit vom Drehwinkel f dargestellt. Zwischen 0 und 360° kann ein Ausgangssignal X(**f**) eindeutig einem Drehwinkel **f** zugeordnet werden.

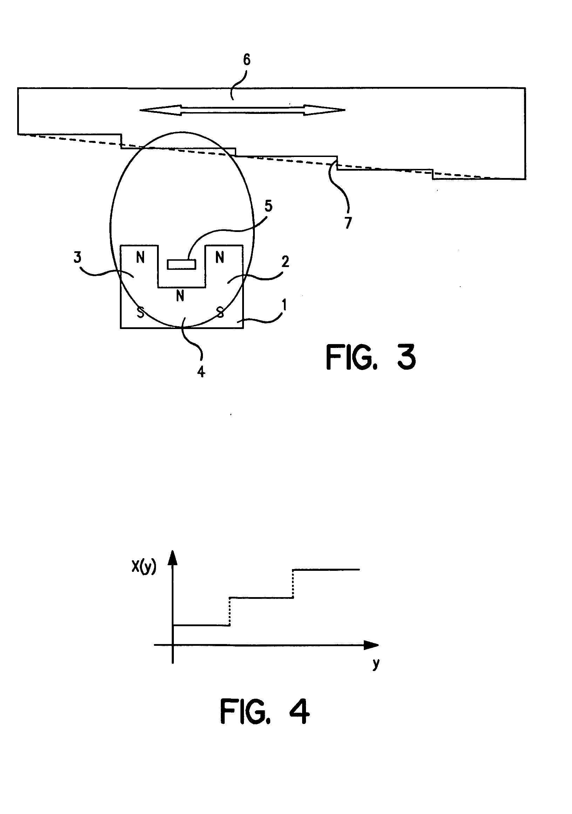

In Figur 3 ist der Einsatz eines erfindungsgemässen linear messenden Positions- und Winkelsensors als Positionssensor dargestellt. Die translatorische Position eines Teils, das mit einem Auslöseteil verbunden ist, wird dabei linear oder in inkrementalen Stufen erfasst.

Wie aus der schematischen Darstellung zu erkennen, entspricht die Magnetanordnung der Figur 3 der aus Figur 1. Es ist ein Dauermagnet 1 vorgesehen. Der Dauermagnet ist U-förmig ausgebildet und weist Schenkel 2,3 und einer Basis 4 auf. Der Dauermagnet weist eine vertikale Magnetisierungsrichtung auf. Im angegebenen Beispiel sind der Nordpol auf der Seite der Öffnung des Dauermagneten und der Südpol auf der Seite der Basis angeordnet. Durch drei gleichnamige, einander abstossende Nordpole des Dauermagneten 1 ist ein magnetflussfreier Bereich gebildet, der sich zwischen den Schenkeln befindet.

In oder möglichst nahe an dieser Singularität ist ein Magnetsensorelement 5 angeordnet. Das Magnetsensorelement ist beispielsweise ein linear messender Hallsensor. Es kann sich dabei um einen Hallsensor mit programmierbarer Linearisierung handeln.

Die Ansteuerung des Magnetsensorelementes erfolgt mit einem oberhalb der Schenkel 2,3 vorgesehenen Auslöseteil 6 aus einem ferromagnetischen Werkstoff. Das Auslöseteil 6 weist eine vorgegebene äussere Kontur auf. Es ist translatorisch verschiebbar parallel zur Ebene und Achse in der die Basis angeordnet bzw. ausgerichtet ist. Das Auslöseelement weist eine zur Ebene in der die Basis angeordnet ist geneigte Flache (gestrichelt) auf oder eine gestufte Fläche. Durch eine Verschiebung des Auslöseteils ändert sich der Abstand zwischen Auslöseteil und Magnetsystem und somit das Magnetfeld. Durch diese Annäherung wird das Magnetfeld im Bereich des Magnetsensorelementes 5 verändert.
Das Magnetsensorelement 5 wandelt die Änderungen des Magnetfeldes in ein proportionales lineares elektrisches Signal X(y) um. Da der Abstand zwischen Auslöseteil und Magnetsystem und die translatorische Lage des Auslöseteils in linearem Zusammenhang stehen kann aus dem Ausgangssignal X(y) auf die translatorische Lage geschlossen werden.

Wenn das Auslöseteil ein gestuftes Profil aufweist, ist auch das Ausgangssignal entsprechend gestuft. Dies ist in Figur 4 dargestellt.

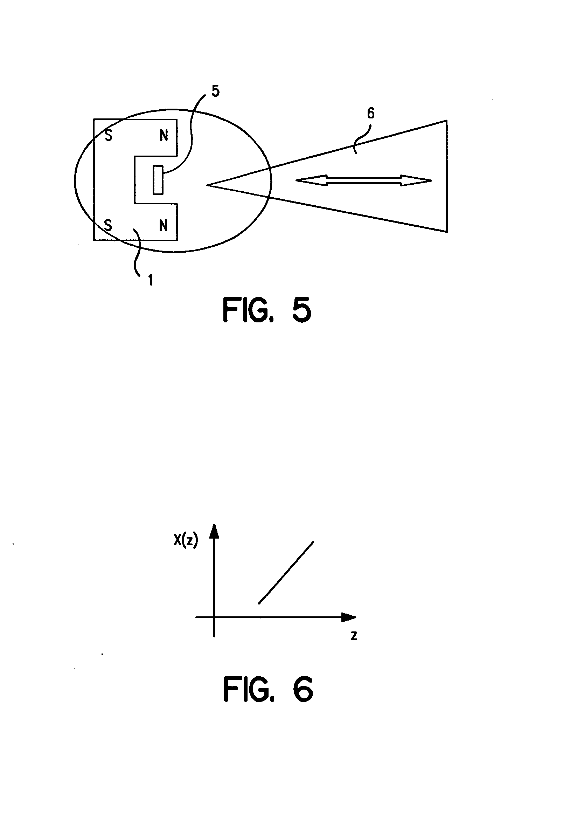

Wie aus der schematischen Darstellung zu erkennen, entspricht die Magnetanordnung der Figur 5 der aus Figur 1. Sie soll daher hier nicht nochmals beschrieben werden.

Die Ansteuerung des Magnetsensorelementes erfolgt mit einem oberhalb der Schenkel 2,3 vorgesehenen Auslöseteil 6 aus einem ferromagnetischen Werkstoff. Das Auslöseteil 6 weist eine vorgegebene äussere Kontur auf. Es ist translatorisch verschiebbar senkrecht zur Ebene in der die Basis angeordnet ist. Das Auslöseelement wird in der Richtung senkrecht zur Ebene in der die Basis angeordnet immer breiter. Durch eine Verschiebung des Auslöseteils auf das Magnetsystem zu oder von diesem weg ändert sich der Abstand zwischen Auslöseteil und Magnetsystem und somit das Magnetfeld. Durch diese Annäherung wird das Magnetfeld im Bereich des Magnetsensorelementes 5 verändert.
Das Magnetsensorelement 5 wandelt die Änderungen des Magnetfeldes in ein proportionales lineares elektrisches Signal X(z) um. Aus dem Ausgangssignal X(z) kann auf die translatorische Lage z des Auslöseteils geschlossen werden.

Der Zusammenhang zwischen Ausgangssignal X(z) und translatorischer Position z ist dem Diagramm in Figur 6 zu entnehmen.

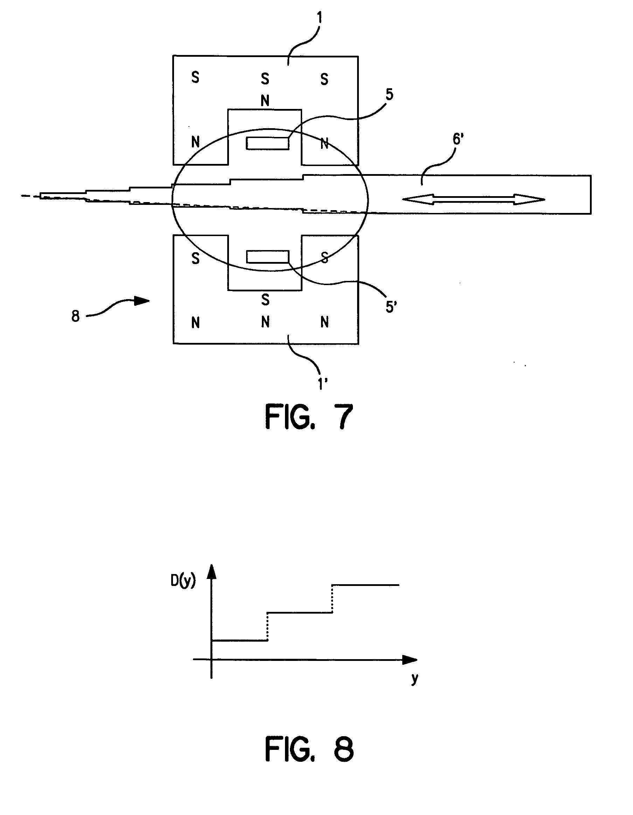

Wie aus der schematischen Darstellung von Figur 7 zu erkennen, sind in diesem Ausführungsbeispiel zwei Sensoranordnungen vorgesehen. Die erste Sensoranordnung entspricht der aus Figur 1. Sie soll daher hier nicht nochmals beschrieben werden. Die Anordnung der zweiten Sensoranordnung 8, ist im Wesentlichen gleich, jedoch weist sie eine gegensinnige Magnetisierung des Dauermagneten 1' auf. Die beiden Sensoranordnungen sind spiegelsymmetrisch mit den Öffnungen der U-förmigen Dauermagneten 1, 1' zueinander angeordnet.

Das Auslöseteil 6' bewegt sich zwischen den Sensoranordnungen. Das Auslöseteil 6' weist eine vorgegebene äussere Kontur auf. Es ist translatorisch verschiebbar parallel zur Ebene und Achse in der die Basis angeordnet bzw. ausgerichtet ist. Das Auslöseelement weist jeweils eine zur Ebene in der die Basis angeordnet ist geneigte Fläche (gestrichelt) auf oder eine gestufte Fläche. Durch eine Verschiebung des Auslöseteils ändert sich der Abstand zwischen Auslöseteil und jedem Magnetsystem und somit das jeweilige Magnetfeld. Durch diese Annäherung wird das Magnetfeld im Bereich der Magnetsensorelemente 5, 5' verändert.

Die Magnetsensorelemente 5, 5' wandeln die Änderungen des Magnetfeldes in je ein proportionales lineares elektrisches Signal X(y) um. Ein Differenzsignal D aus den beiden proportionalen linearen elektrischen Signalen wird gebildet. Durch die Differenzbildung der Signale kann das Profil des Ansteuerelementes lageunabhängig erfasst werden.

Wenn das Auslöseteil ein gestuftes Profil aufweist, ist auch das Differenzsignal entsprechend gestuft. Dies ist in Figur 8 dargestellt.

## Patentansprüche

1. Linear messender Positions- und Winkelsensor
- mit einem U-förmigen Dauermagneten (1) mit Schenkeln (2,3) und einer Basis (4), der eine vertikale Magnetisierungsrichtung aufweist,
- wobei durch drei gleichnamige, einander abstossende Pole des Dauermagneten (1) ein magnetflussfreier Bereich gebildet ist, in dem ein Magnetsensorelement (5) angeordnet ist,
- mit einem oberhalb der Schenkel (2,3) vorgesehenen bewegbaren Auslöseteil (6) aus einem ferromagnetischen Werkstoff,
- wobei das Auslöseteil (6), eine vorgegebene äussere Kontur aufweist, die sich bei Bewegung des Auslöseteils (6) der Basis (4) des Dauermagneten (1) annähert oder von dieser entfernt und dadurch das Magnetfeld im Bereich des Magnetsensorelementes (5) verändert,
**dadurch gekennzeichnet, dass** das Magnetsensorelement (5) Änderungen des Magnetfeldes in ein proportionales lineares elektrisches Ausgangssignal X umwandelt.

2. Linear messender Positions- und Winkelsensor nach Anspruch 1, **dadurch gekennzeichnet, dass** das Magnetsensorelement (5) sich zwischen den Schenkeln (2,3) des Dauermagneten (1) befindet.

3. Linear messender Positions- und Winkelsensor nach Anspruch 1, **dadurch gekennzeichnet, dass** durch Anordnung eines zusätzlichen Magneten der magnetflussfreie Bereich vor den Schenkeln des Dauermagneten vorgesehen ist und das Magnetsensorelement dort angeordnet ist.

4. Linear messender Positions- und Winkelsensor nach Anspruch 2, **dadurch gekennzeichnet, dass** das Auslöseteil eine äussere Kontur mit zumindest einem Profilsprung (7) aufweist.

5. Linear messender Positions- und Winkelsensor nach Anspruch 2, **dadurch gekennzeichnet, dass** das Auslöseteil eine linear gekrümmte äussere Kontur aufweist.

6. Linear messender Positions- und Winkelsensor nach Anspruch 2, **dadurch gekennzeichnet, dass** das Auslöseteil aus verschiedenen permeablen Werkstoffen bestehen kann.

7. Linear messender Positions- und Winkelsensor nach Anspruch 2, **dadurch gekennzeichnet, dass** eine zweite Sensoranordnung (8) mit gegensinniger Magnetisierung des Dauermagneten (1') spiegelsymmetrisch zur ersten mit den Öffnungen der U-förmigen Dauermagneten (1, 1') zueinander angeordnet sind.

8. Linear messender Positions- und Winkelsensor nach Anspruch 7, **dadurch gekennzeichnet, dass** das Auslöseteil (6') sich zwischen den Sensoranordnungen bewegt und dass das Differenzsignal D aus den beiden proportionalen linearen elektrischen Signalen gebildet wird.
